# EUROPÄISCHE PATENTSCHRIFT

(11) **EP 0 487 457 B1**
(45) Veröffentlichungstag und Bekanntmachung des Hinweises auf die Patenterteilung: **23.03.1994**
(21) Anmeldenummer: 91810905.9
(22) Anmeldetag: 20.11.1991
(51) Int. Cl.: B25D 17/08, F16D 1/10

(54) **Bohr- und Meisselgerät**
Drilling and chiseling tool
Outil pour forer et ciseler

(30) Priorität: 22.11.1990 DE 4037148
(43) Veröffentlichungstag der Anmeldung: 27.05.1992
(73) Patentinhaber: HILTI Aktiengesellschaft, 9494 Schaan (LI)
(72) Erfinder: Vinko, Pacher, W-8000 München 2 (DE)
(74) Vertreter: Wildi, Roland

(56) Entgegenhaltungen:
- DE-A- 560 209
- DE-A- 613 109
- DE-A- 929 998
- DE-A- 2 850 087
- DE-A- 3 637 354
- DE-B- 1 026 134

## Beschreibung

Die Erfindung betrifft ein Bohr- und Meisselgerät mit einem mit dem Gerätehals lösbar verbundenen Werkzeughalter, der eine den Gerätehals übergreifende Kappe aufweist, wobei die Kappe mit einer Innenverzahnung und der Gerätehals mit einer Aussenverzahnung versehen ist.

Bohr- und Meisselgeräte der hier in Betracht kommenden Gewichtaklasse zeichnen sich durch eine leichte und handliche Bauweise aus. Derartige Geräte werden vorwiegend für das Bohren in Eisen, Holz, Kunststoff und in Kombination mit dem Schlagwerk zum Bohren in Gestein verwendet. Bei diesen Bohr-und Meisselgeräten ist es zwar möglich, die Schlagfunktion abzuschalten, nicht aber den Drehantrieb.

Aus der DE-PS 36 37 354 ist ein werkzeughalter bekannt, der als separates Schlag-Vorsatzfutter ausgebildet ist. Dieses Schlag-Vorsatzfutter weist eine Kappe auf, über die es auf einem maschinenseitigen Gerätehals festklemmbar ist.

Werkzeughalter dieser Art weisen den Nachteil auf, dass deren Kappe auf den Gerätehals aufgesteckt und anschliessend in Unfangsrichtung über Spannaugen mit einer Spannschraube zusammengezogen werden muss.

Beim Abheben des Meissels von eine zu bearbeitenden Bauteil werden die vom Schlagkolben des Gerätes in axialer Richtung erzeugten Schläge zur Gänze vom Schlag-Vorsatzfutter aufgefangen. Dabei kann die Kappe vom Gerätehals abgleiten. Um dies zu vermeiden, muss die Spannschraube derart stark angezogen werden, dass unter Umständen eine Verformung und Beschädigung des Gerätehalses eintritt.

Aus der DE-A-560 209 ist ein Werkzeughalter, bestehend aus einer Kappe, bekannt. Diese Kappe, welche das Werkzeug aufnimmt, ist über eine bajonettartig ausgebildete, in Umfangsrichtung verlaufende Verzahnung mit einem Gerätehals verbindbar. Dabei weist der Gerätehals eine Aussenverzahnung und die Kappe eine Innenverzahnung auf. Durch Verdrehen sind die Verzahnungen in ihrer Gesamtheit gegeneinander versetzbar, was dazu führt, dass sowohl Kappe als auch Werkzeug eine Verdrehung erfährt. Darüber hinaus kann das Werkzeug nur durch Lösen der Verbindung zwischen Kappe und Gerätehals entfernt werden.

Der Erfindung liegt die Aufgabe zugrunde, ein Bohr- und Meisselgerät mit einem sicher und beschädigungsfrei mit dem Gerätehals lösbar verbundenen Werkzeughalter zu schaffen.

Die Aufgabe wird erfindungsgemäss dadurch gelöst, dass die Innenverzahnung der Kappe in Längsrichtung des Gerätehalses verläuft und die Aussenverzahnung des Gerätehalses komplementär ausgebildet ist, wobei ein Teil der Innenverzahnung gegenüber der restlichen Innenverzahnung versetzbar ist und dabei in wenigstens eine Ausnehmung im Bereich der Aussenverzahnung des Gerätehalses eingreift.

Durch die erfindungsgemässe Ausgestaltung ist es somit möglich, ohne Werkzeug mittels einer einfachen Verdrehung eines Ringes des Werkzeughalters in Umfangsrichtung den Werkzeughalter am Gerätehals zu befestigen. Ueber die versetzbare Innenverzahnung werden die vom Schlagkolben erzeugten axialen Schläge aufgenommen, ohne dass sich der Werkzeughalter in axialer Richtung bewegt.

Einer weiteren Ausgestaltung der Erfindung entsprechend ist der versetzbare Teil der Innenverzahnung gegenüber dem Rest der Innenverzahnung in Umfangsrichtung verdrehbar und dabei in entsprechende Ausnehmungen im Bereich der komplementär ausgebildeten Aussenverzahnung des Gerätehalses einrückbar.

Vorzugsweise entspricht der Betrag der Bewegung des versetzbaren Teiles in Umfangsrichtung vorzugsweise einer Zahnbreite. Bei der Verdrehung des versetzbaren Teiles um die Breite eines Zahnes übernimmt die gesamte Querschnittsfläche des Zahnes die maximale Belastungskraft, die in axialer Richtung, d.h. in Längsrichtung des Zahnes auftritt. Ist die Verdrehung geringer, so übernimmt nur ein Teil der Querschnittsfläche des Zahnes die Belastungskraft. Damit Beschädigungen vermieden werden können, muss in eine solchen Fall die Belastungskraft reduziert werden.

Eine zweckmässige Ausgestaltung der Erfindung weist am Umfang verteilt angeordnete, versetzbare Teile der Innenverzahnung auf. Dabei kann ein Zahn, höchstens jedoch jeder Zahn der Innenverzahnung, einen versetzbaren Teil aufweisen.

Vorteilhafterweise ist der versetzbare Teil der Innenverzahnung radial bewegbar. Ein Teil der Innenverzahnung ist somit radial in Richtung Zentrum bewegbar und kann dabei in eine entsprechende Ausnehmung im Bereich der komplementär ausgebildeten Aussenverzahnung des Gerätehalses eingreifen.

Vorteilhafterweise entspricht der Betrag der radialen Bewegung des versetzbaren Teiles der Innenverzahnung vorzugsweise der Zahnhöhe. Dadurch wird die Wandstärke der Kappe im Bereich der mechanischen Verriegelung gering gehalten. Bei einer geringeren Zahnhöhe ist die Querschnittsfläche des Zahnes entsprechend kleiner. Die Belastungskraft muss dementsprechend verringert werden.

Vorteilhafterweise entspricht der Betrag der Erstreckung des versetzbaren Teiles in Längsrichtung einem Drittel der Zahnlänge.

Die Erfindung wird nachstehend anhand von Ausführungsbeispielen näher erläutert. Es zeigen:
- Fig. 1: ein Bohr- und Meisselgerät mit einem lösbar verbundenen Werkzeughalter;
- Fig. 2: den Werkzeughalter gemäss Fig. 1 in vergrösserter Darstellung, teilweise geschnitten; Teile der Innenverzahnung sind in Umfangsrichtung versetzbar;
- Fig. 3: eine Ansicht des Werkzeughalters in Richtung III gemäss Fig. 2;
- Fig. 4: einen Gerätehals zur Aufname des Werkzeughalters gemäss Fig. 2 und 3;
- Fig. 5: einen weiteren Werkzeughalter in vergrösserter Darstellung, teilweise geschnitten, Teile der Innenverzahnung sind radial bewegbar;
- Fig. 6: eine Ansicht des Werkzeughalters in Verriegelungsstellung in Richtung VI gemäss Fig. 5;
- Fig. 7: einen vergrösserten Ausschnitt gemäss Fig. 6;
- Fig. 8: einen Gerätehals zur Aufnahme des Werkzeughalters gemäss Fig. 5 bis 7.

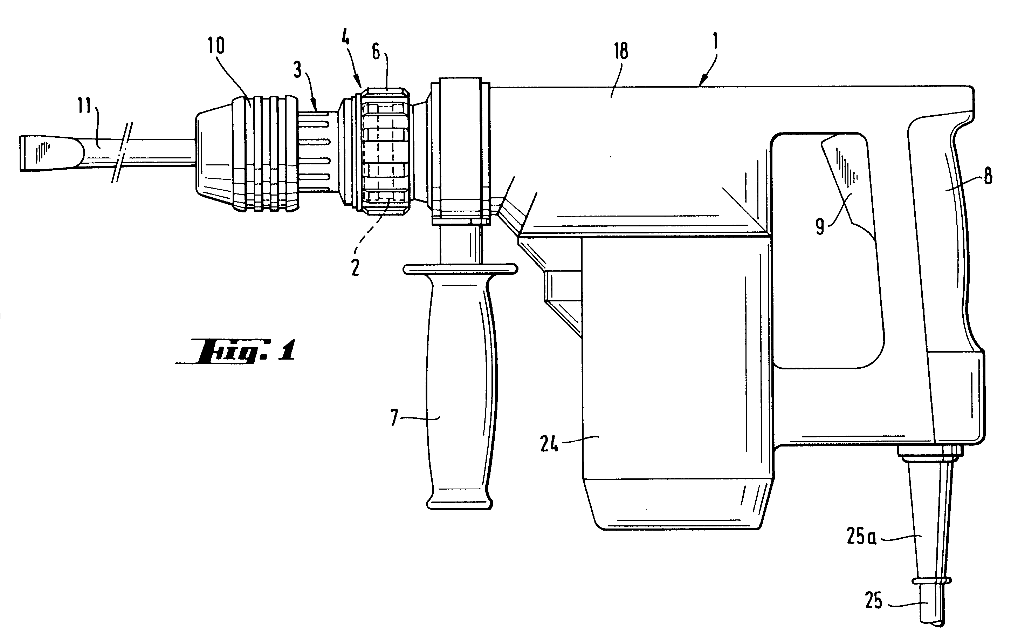

Das in der Fig. 1 dargestellte Bohr- und Meisselgerät 1 weist in seinem vorderen Bereich einen Gerätehals 2 auf, welcher der Aufname eines vom Gerät 1 lösbaren Werkzeughalters 3 dient. Im vorderen Bereich des Bohr- und Meisselgerätes 1 befindet sich eingespannt im Werkzeughalter 3 ein Werkzeug 11 in Form eines Flachmeissels. Hinter dem Werkzeughalter 3 befindet sich ein Seitengriff 7, der radial um den Gerätehals 2 schwenkbar und in der gewünschten Position arretierbar ist.

An der Rückseite des Bohr- und Meisselgerätes 1 ist ein Gerätehandgriff 8 angeordnet, in dem ein Betätigungsschalter 9 eingebaut ist. Über diesen Betätigungsschalter 9 kann das Bohr- und Meisselgerät 1 in Betrieb gesetzt werden.

Am unteren Ende des Gerätehandgriffes 8 ist durch eine elastische Tülle 25a ein Stromzuleitungskabel 25 eingeführt.

Der elektrische Antrieb 24 und das Schlagwerk 18 sind nicht näher dargestellt. Aus der Zeichnung ist nur deren Lage zu erkennen.

Der Werkzeughalter 3 ist als Bauteil lösbar mit dem Gerätehals 2 des Bohr- und Meisselgerätes 1 verbunden. Er besteht aus einer Werkzeugaufnahme 10 und einer Kappe 4.

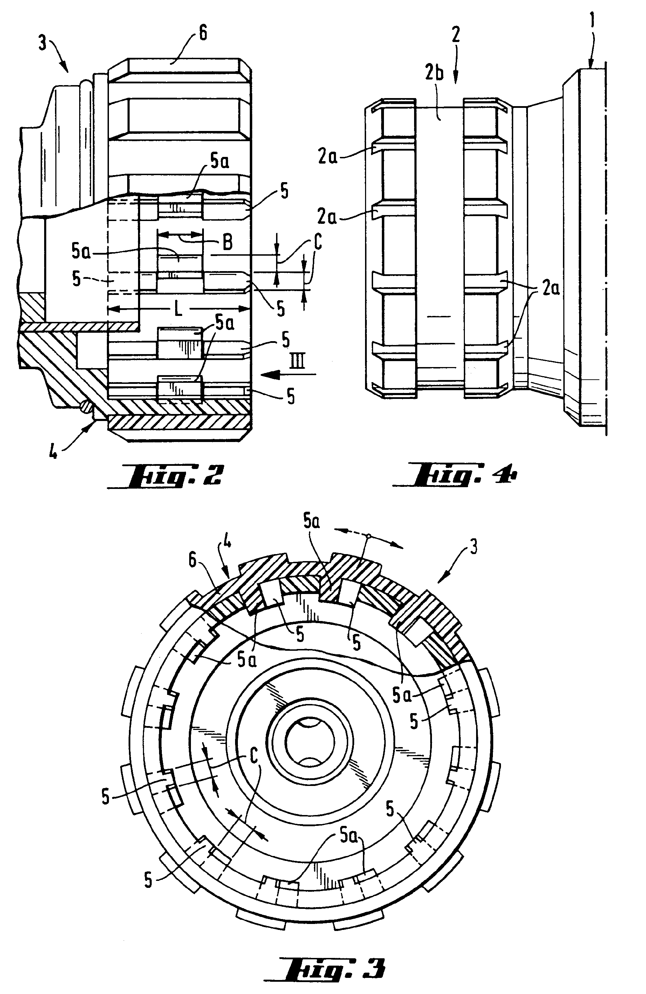

Wie die Figuren 2 bis 4 zeigen, weist die Kappe 4 eine längsgerichtete Innenverzahnung 5, 5a und der Gerätehals 2 eine längsgerichtete Aussenverzahnung 2a auf, die komplementär zur Innenverzahnung 5, 5a ausgebildet ist. Bei der Montage wird der Werkzeughalter 3 mit seiner innenverzahnten Kappe 4 auf die Aussenverzahnung 2a des Gerätehalses 2 aufgeschoben.

Ist der Werkzeughalter 3 ganz auf den Gerätehals 2 aufgeschoben, so wird wenigstens ein Teil der Innenverzahnung 5a in Umfangsrichtung bewegt. Dort greift dieser Teil in eine Ausnehmung 2b des Gerätehalses 2 und verriegelt somit den Werkzeughalter 3.

Um die versetzbaren Teile der Innenverzahnung 5a in Umfangsrichtung zu bewegen, weist die Kappe 4 einen äusseren Ring 6 auf, der gegenüber der Innenverzahnung 5 in Umfangsrichtung verdrehbar ist. Mit diesem Ring 6 sind die versetzbaren Teile der Innenverzahnung 5a verbunden oder betätigbar. Durch die Verdrehung des Ringes 6 werden die versetzbaren Teile der Innenverzahnung 5a in Umfangsrichtung bewegt.

Der Werkzeughalter 3 besteht teilweise aus Kunststoff und andere Teile im wesentlichen aus Metall, Aluminium oder Gummi.

Die Figur 3 zeigt eine Ansicht des Werkzeughalters 3 gemäss Fig. 2. Abgebildet ist eine teilweise geschnittene Kappe 4. Die Zähne der Innenverzahnung 5, 5a weisen eine Breite C auf. Die versetzbaren Teile der Innenverzahnung 5a weisen vorzugsweise eine Länge B auf, die einem Drittel der gesamten Zahnlänge L entsprechen und im mittleren Drittel angeordnet sind.

Der Querschnitt eines Zahnes sowohl der Innenverzahnung 5, 5a des Werkzeughalters 3 als auch der Aussenverzahnung 2a des Gerätehalses 2 kann halbkreisförmig, pyramidenförmig, gerundet, zweckmässigerweise aber rechteckig ausgebildet sein.

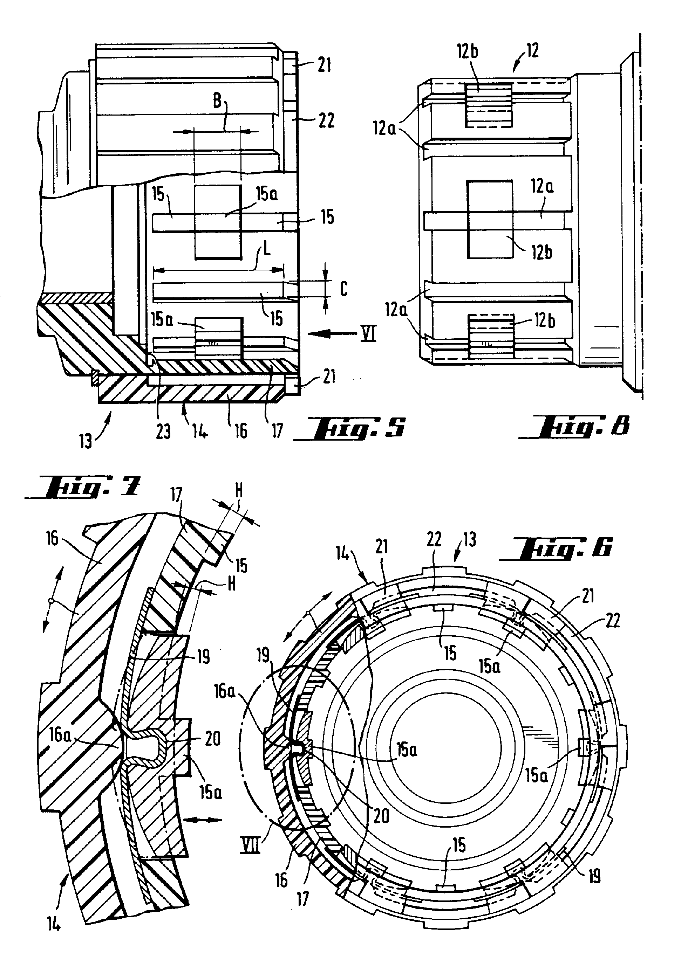

Die Figur 4 zeigt den Gerätehals 2 des Bohr- und Meisselgerätes 1, auf dem ein Werkzeughalter 10 mit in Umfangsrichtung versetzbaren Teilen der Innenverzahnung 5a befestigbar ist. Die in dieser Figur 4 erkennbare Ausnehmung 2b ist umlaufend ausgebildet. Diese Ausnehmung 2b kann auch entsprechend der Form des verriegelnden Teiles der Innenverzahnung 5a ausgebildet sein.

Die Figuren 5 bis 7 zeigen einen weiteren Werkzeughalter 13 mit einer Kappe 14, die der Verbindung mit einem Gerätehals 12 dient. Die Kappe 14 weist eine längsgerichtete Innenverzahnung 15, 15a und der Gerätehals 12 eine längsgerichtete Aussenverzahnung 12a auf, die komplementär zur Innenverzahnung 15, 15a ausgebildet ist.

Bei der Montage wird der Werkzeughalter 13 mit seiner innenverzahnten Kappe 14 auf die Aussenverzahnung 12a des Gerätehalses 12 aufgeschoben, bis dieser am Anschlag 23 zu liegen kommt.

Um die versetzbaren Teile der Innenverzahnung 15a radial bewegen zu können, weist der Werkzeughalter 13 im Bereich der Kappe 14 einen äusseren Ring 16 und einen inneren, die Innenverzahnung tragenden Ring 17 auf. Der äussere Ring 16 ist gegenüber dem inneren Ring 17, der das rückärtige Ende des Werkzeughalters 13 bildet, verdrehbar. Innen am Ring 16 sind entsprechend der Anzahl versetzbarer Teile der Innenverzahnung 15a Vorsprünge 16a in Form von den Innendurchmesser verkleinernden Flächen angeordnet. Durch die Verdrehung des Ringes 16 in Umfangsrichtung drücken die Vorsprünge 16a die Rückholfedern 19 und somit die versetzbaren Teile der Innenverzahnung 15a radial in Richtung Zentrum. Dabei greifen diese Teile in Ausnehmungen 12b des Gerätehaltes 12 und verriegeln somit den Werkzeughalter 13.

Die Rückholfeder 19 ist mit dem versetzbaren Teil der Innenverzahnung 15a über eine taschenförmige Ausnehmung 20 fest verbunden. Die Ausnehmung 20 ist gegenüber dem Zahn des versetzbaren Teiles der Innenverzahnung 15a angeordnet und verläuft vorzugsweise in der gleichen Richtung wie der Zahn. Die Ausnehmung 20 erstreckt sich über das ganze versetzbare Teil der Innenverzahnung 15a. Die Öffnungsweite der Ausnehmung 20 ist kleiner als der Durchmesser des Ausnehmungsquerschnittes.

Die Rückholfeder 19 besitzt eine Anbiegung, die genau die Form der Ausnehmung 20 aufweist und somit seitlich in Ausnehmung 20 eingesteckt werden kann. Somit ist eine radiale Fixierung zwischen Rückholfeder 19 und dem versetzbaren Teil der Innenverzahnung 15a gewährleistet.

Die Rückholfeder 19 besitzt des weiteren zwei flügelartige Enden, die sich über den versetzbaren Teil erstrecken und sich am Aussenumfang des inneren Ringes 17, der die Innenverzahnung 15, 15a trägt, abstützen. Somit wird gewährleistet, dass ausser Eingriff des Vorsprungs 16a das versetzbare Teil der Innenverzahnung 15a nach aussen gezogen wird und somit nicht mehr in die Ausnehmung 12b des Gerätehalters 12 greift.

Der Werkzeughalter 13 besteht teilweise aus Kunststoff und andere Teile im wesentlichen aus Metall, Aluminium oder Gummi.

Die Figur 6 zeigt eine Ansicht des Werkzeughalters 13 gemäss Fig. 5. Abgebildet ist eine teilweise geschnittene Kappe 14. Die Zähne der Innenverzahnung 15, 15a weisen eine Breite C auf. Die versetzbaren Teile der Innenverzahnung 15a weisen vorzugsweise eine Länge B auf, die einem Drittel der gesamten Zahnlänge L entsprechen und im mittleren Drittel angeordnet sind.

Der Querschnitt eines Zahnes sowohl der Innenverzahnung 15, 15a das Werkzeughalters 13 als auch der Aussenverzahnung 12a des Gerätehalses 12 kann halbkreisförmig, pyramidenförmig, gerundet, zweckmässigerweise aber rechteckig ausgebildet sein.

Die Figur 7 zeigt eine Vergrösserung eines Ausschnittes der Figur 6. Darin erkennbar ist die Innenverzahnung 15 und ein radial versetzbares Teil der Innenverzahnung 15a, das eine im wesentlichen halbkreisförmige Ausnehmung 20 aufweist. Diese Ausnehmung 20 dient der Halterung einer Rückholfeder 19. Der äussere Ring 16 weist an der Innenseite wenigstens einen Vorsprung 16a auf. Durch Verdrehen des Ringes 16 mittels dieses Vorsprunges 16a ist das radial versetzbare Teil der Innenverzahnung 15a um das Mass H entsprechend der Zahnhöhe zum Zentrum hin bewegbar und somit in Verriegelungsstellung bringbar. Durch Zurückdrehen des äusseren Ringes 16 ist der Vorsprung 16a wieder ausser Eingriff. Der Freiraum, in dem eine Verdrehung möglich ist, wird von der Länge wenigstens einer Ausnehmung 22 bestimmt, in der sich wenigstens eine Nocke 21 bewegen kann. Die Rückholfeder 19 bewirkt ein Rückziehen des versetzbaren Teiles 15a in die Grundstellung.

Die Figur 8 zeigt einen Gerätehals 12 eines Bohr- und Meisselgerätes 1, an dem der Werkzeughalter 13 mit radial zum Zentrum hin versetzbaren Teilen der Innenverzahnung 15a befestigbar ist. Dieser Gerätehals 12 weist im Bereich eines jeden zweiten Zahnes eine Ausnehmung 12b auf. Entsprechend der Ausgestaltung der radial versetzbaren Teile können auch Ausnehmungen 12b im Bereich eines jeden Zahnes angeordnet sein.

Eine umlaufend ausgebildete Ausnehmung, wie sie im wesentlichen aus dem Beispiel in Figur 4 ersichtlich ist, ist ebenfalls möglich.

Da beim radial versetzbaren Teil der Innenverzahnung 15a das ganze Teil radial bewegt wird, muss bei der Ausgestaltung der Ausnehmung 12b die Form des ganzen Teiles berücksichtigt werden.

## Patentansprüche

1. Bohr- und Meisselgerät mit einem mit dem Gerätehals (2, 12) lösbar verbundenen Werkzeughalter (3, 13), der eine den Gerätehals (2, 12) übergreifende Kappe (4, 14) aufweist, wobei die Kappe (4, 14) mit einer Innenverzahnung (5, 5a, 15, 15a) und der Gerätehals (2, 12) mit einer Aussenverzahnung (2a, 2b, 12a, 12b) versehen ist, **dadurch gekennzeichnet**, dass die Innenverzahnung (5, 5a, 15, 15a) der Kappe (4, 14) in Längsrichtung des Gerätehalses (2, 12) verläuft und die Aussenverzahnung (2a, 2b, 12a, 12b) des Gerätehalses (2, 12) komplementär ausgebildet ist, wobei ein Teil der Innenverzahnung (5a, 15a) gegenüber der restlichen Innenverzahnung (5, 15) versetzbar ist und dabei in wenigstens eine Ausnehmung (2b, 12b) im Bereich der Aussenverzahnung (2a, 2b, 12a, 12b) des Gerätehalses (2, 12) eingreift.

2. Bohr- und Meisselgerät nach Anspruch 1, dadurch gekennzeichnet, dass der versetzbare Teil der Innenverzahnung (5a) gegenüber dem Rest der Innenverzahnung (5) in Umfangsrichtung verdrehbar ist.

3. Bohr- und Meisselgerät nach Anspruch 2, dadurch gekennzeichnet, dass der Betrag der Bewegung des versetzbaren Teiles in Umfangsrichtung vorzugsweise einer Zahnbreite (C) entspricht.

4. Bohr- und Meisselgerät nach Anspruch 1, dadurch gekennzeichnet, dass der versetzbare Teil der Innenverzahnung (15a) gegenüber dem Rest der Innenverzahnung (15) radial bewegbar ist.

5. Bohr- und Meisselgerät nach Anspruch 4, dadurch gekennzeichnet, dass die radiale Bewegung des versetzbaren Teiles der Innenverzahnung (5a, 15a) vorzugsweise der Zahnhöhe (H) entspricht.

6. Bohr- und Meisselgerät nach einem der Ansprüche 1 bis 5, dadurch gekennzeichnet, dass der Betrag der Erstreckung (B) des versetzbaren Teiles der Innenverzahnung (5a, 15a) in Längsrichtung einem Drittel der Zahnlänge (L) entspricht.

## Claims

1. Drilling and chiseling apparatus, comprising a tool chuck (3, 13), which is detachably connected to the tool neck (2, 12) and which comprises a cap (4, 14) which reaches over the tool neck (2, 12), in which respect the cap (4, 14) is provided with an internal toothing (5, 5a, 15, 15a) and the tool neck (2, 12) is provided with an external toothing (2a, 2b, 12a, 12b), **characterised** **in** **that** the internal toothing (5, 5a, 15, 15a) of the cap (4, 14) extends in the longitudinal direction of the tool neck (2, 12), and the external toothing (2a, 2b, 12a, 12b) of the tool neck (2, 12) is complementarily arranged, in which respect a portion of the internal toothing (5a, 15a) is transposable relative to the remaining internal toothing (5, 15) and thereby engages at least one recess (2b, 12b) in the area of the external toothing (2a, 2b, 12a, 12b) of the tool neck (2, 12).

2. Drilling and chiseling apparatus according to claim 1, **characterised** **in** **that** the transposable portion of the internal toothing (5a) is rotatable in the peripheral direction relative to the remainder of the internal toothing (5).

3. Drilling and chiseling apparatus according to claim 2, **characterised** **in** **that** the amount of movement of the transposable portion in the peripheral direction preferably equals one tooth width (C).

4. Drilling and chiseling apparatus according to claim 1, **characterised** **in** **that** the transposable portion of the internal toothing (15a) is radially movable relative to the remainder of the internal toothing (15).

5. Drilling and chiseling apparatus according to claim 4, **characterised** **in** **that** the radial movement of the transposable portion of the internal toothing (5a, 15a) preferably equals one tooth height (H).

6. Drilling and chiseling apparatus according to one of claims 1 to 5, **characterised in that** the the amount of the extent (B) of the transposable portion of the internal toothing (5a, 15a) in the longitudinal direction equals one third of the tooth length (L).

## Revendications

1. Outil de perçage et de burinage, comprenant un porte-outil (3, 13) couplé de manière amovible avec le col (2, 12) de l'appareil et comportant un capuchon (4, 14) qui recouvre le col (2, 12) de l'appareil, le capuchon (4, 14) étant muni d'une denture intérieure (5, 5a, 15, 15a) et le col (2, 12) de l'appareil présentant une denture extérieure (2a, 2b, 12a, 12b), caractérisé en ce que la denture intérieure (5, 5a, 15, 15a) du capuchon (4, 14) s'étend dans le sens longitudinal du col (2, 12) de l'appareil et que la denture extérieure (2a, 2b, 12a, 12b) du col (2, 12) de l'ap-pareil est de forme complémentaire, une partie de la denture intérieure (5a, 15a) pouvant être décalée par rapport au reste de la denture intérieure (5, 15) et s'engageant alors dans au moins un évidement (2b, 12b) dans la région de la denture ex-térieure (2a, 2b, 12a, 12b) du col (2, 12) de l'appareil.

2. Outil de perçage et de burinage selon la revendication 1, caractérisé en ce que la partie déplaçable de la denture intérieure (5a) peut être tournée par rapport au reste de la denture intérieure (5) dans le sens circonférentiel.

3. Outil de perçage et de burinage selon la revendication 2, caractérisé en ce que la quantité du mouvement de la partie déplaçable dans le sens circonférentiel correspond de préférence à une largeur de dent (C).

4. Outil de perçage et de burinage selon la revendication 1, caractérisé en ce que la partie déplaçable de la denture intérieure (15a) peut être déplacée radialement par rapport au reste de la denture intérieure (15).

5. Outil de perçage et de burinage selon la revendication 4, caractérisé en ce que le mouvement radial de la partie déplaçable de la denture intérieure (5a, 15a) correspond de préférence à la hauteur (H) des dents.

6. Outil de perçage et de burinage selon l'une des revendications 1 à 5, caractérisé en ce que la quantité de l'extension (B) de la partie déplaçable de la denture intérieure (5a, 15a) dans le sens longitudinal correspond à un tiers de la longueur (L) des dents.
